# FASCICULE DE BREVET EUROPEEN

(11) **EP 2 080 345 B1**
(45) Date de publication et mention de la délivrance du brevet: **04.09.2013**
(21) Numéro de dépôt: 07803990.6
(22) Date de dépôt: 06.07.2007
(51) Int. Cl.: H04L 29/06

(54) **PROCEDE DE GESTION D'IDENTITES PUBLIQUES DANS UN RESEAU DE TRANSMISSION D'INFORMATIONS, SERVEUR DE GESTION D'ENREGISTREMENTS D'IDENTITES PUBLIQUES, EQUIPEMENT DE GESTION D'UNE IDENTITE PUBLIQUE DE GROUPE ET PROGRAMMES D'ORDINATEUR CORRESPONDANTS**
VERFAHREN ZUR VERWALTUNG ÖFFENTLICHER IDENTITÄTEN IN EINEM INFORMATIONSÜBERTRAGUNGSNETZ, SERVER ZUR VERWALTUNG VON DATENSÄTZEN ÖFFENTLICHER IDENTITÄTEN, EINRICHTUNG ZUR VERWALTUNG EINER ÖFFENTLICHEN GRUPPENIDENTITÄT UND ENTSPRECHENDE COMPUTERPROGRAMME
METHOD FOR MANAGEMENT OF PUBLIC IDENTITIES IN AN INFORMATION TRANSMISSION NETWORK, SERVER FOR MANAGING PUBLIC IDENTITY RECORDS, EQUIPMENT FOR MANAGING A GROUP PUBLIC IDENTITY AND CORRESPONDING COMPUTER PROGRAMS

(30) Priorité: 06.07.2006 FR 0652828
(43) Date de publication de la demande: 22.07.2009
(73) Titulaire: France Télécom, 75015 Paris (FR)
(72) Inventeur: GARCIN, Sébastien, F-13008 Marseille (FR); PROUVOST, Sébastien, F-31300 TOULOUSE (FR); CLEUZIOU, Olivier, F-94200 Ivry Sur Seine (FR)
(74) Mandataire: Cabinet Plasseraud
(86) Numéro de dépôt international: PCT/FR2007/051611
(87) Numéro de publication internationale: WO 2008/003915

(56) Documents cités:
- US-A1- 2004 133 683
- US-B1- 6 657 992
- "Call signalling protocols and media stream packetization for packet-based multimedia communication systems" ITU-T STANDARD PRE-PUBLISHED (P), INTERNATIONAL TELECOMMUNICATION UNION, GENEVA,, CH, no. H2250 5/6, 29 mai 2006 (2006-05-29), XP017404721

## Description

La présente invention concerne un procédé de gestion d'identités publiques dans un réseau de transmission d'informations.

Elle concerne également un serveur d'enregistrement d'identités publiques correspondant, un équipement de gestion d'une identité publique de groupe et des programmes d'ordinateur pour cette application.

Plus particulièrement l'invention se rapporte aux réseaux de transmission d'informations de type Internet mettant en oeuvre un protocole SIP (Session Initiation Protocol) pour l'établissement de liaisons de transmission de données entre le réseau et un équipement de gestion d'une identité publique de groupe raccordé à un tel réseau.

Le protocole SIP s'est imposé comme le protocole de référence pour l'établissement de sessions conversationnelles entre plusieurs utilisateurs dans un environnement IP (Internet Protocol). Il a pour ambition, éventuellement dans le cadre d'architectures réseau globales comme celles définies par certaines instances de normalisation pour permettre à un opérateur de télécommunication d'offrir à ses clients des services conversationnels au-dessus d'un réseau IP (par exemple des architectures définies par l'ETSI TISPAN ou par CableLabs), de permettre de reproduire et d'étendre les usages actuellement connus dans les réseaux téléphoniques commutés (RTC). Les usagers d'un réseau SIP sont identifiés soit par un numéro de téléphone de longueur fixe, comme par exemple dix chiffres en France, et l'on parle alors de plan fermé ou de longueur variable comme par exemple selon la zone géographique en Allemagne, et l'on parle alors de plan ouvert, soit par un identifiant alphanumérique dédié proche du format mail SIP : URI (Uniform Resource Identifier).

Le protocole SIP permet également le raccordement à des réseaux d'opérateurs de télécommunication de différents types d'utilisateurs et de différents types d'équipements terminaux. Parmi ceux-ci, on peut citer le cas des réseaux d'entreprises ou des IPBX (IP Private Branch Exchange), c'est-à-dire des installations privées d'entreprises raccordées en IP au réseau d'un opérateur public et pouvant offrir des services aux terminaux raccordés sur le réseau d'entreprise (comme par exemple une numérotation abrégée, etc.) tel que le font actuellement les PABX (Private Automatic Branch Exchange) d'entreprises.

Dans les réseaux téléphoniques, ces entités sont généralement constituées d'une ou de plusieurs tranches de numéros du plan de numérotage du pays où ils sont raccordés (par exemple, la tranche 123456 du plan de numérotage français), ces tranches pouvant être là encore de longueur fixe comme c'est le cas en France ou de longueur variable comme c'est le cas dans d'autres pays.

Dans ce dernier cas, c'est le gestionnaire du réseau d'entreprise ou de l'IPBX qui a la charge d'organiser sa ou ses tranches en sous-tranches de longueurs éventuellement différentes.

Le réseau est alors transparent à cette organisation et se contente de livrer à ce réseau d'entreprise ou IPBX, tout appel vers l'un des numéros d'une de ses tranches indépendamment de la longueur de ce numéro et du fait qu'il respecte ou non la longueur des numéros de la sous-tranche à laquelle il appartient.

Le protocole SIP est basé sur un concept de double identification des utilisateurs :
- un premier identifiant, que l'on appellera par la suite *identité publique* (appelée *Address of Record*), qui représente l'identité à partir de laquelle l'usager peut être joint (par exemple le numéro de téléphone ou une séquence alphanumérique de type prenom.nom@domain),
- un second identifiant, que l'on appellera par la suite *adresse de contact* (appelée *Contact Address*)*,* qui représente l'adresse physique réseau où l'usager peut être joint (par exemple l'adresse IP du terminal de l'utilisateur).

L'association entre une identité publique et une (ou plusieurs) adresse de contact peut changer dans le temps. Une phase dite phase d'enregistrement permet à un usager de faire savoir au réseau et plus particulièrement à une entité particulière de celui-ci, qui gère son état d'enregistrement (appelée *REGISTRAR*)*,* l'association entre son identité publique et son ou ses adresses de contact.

Cette association est ensuite stockée dans une base de données de localisation d'un serveur de localisation associé au réseau qui sera interrogé lors d'une requête entrante à destination de l'usager (identifié par son identité publique) afin de trouver la ou les adresses de contact associées où faire suivre cette requête.

La mise en oeuvre de ce mécanisme d'enregistrement par le protocole SIP est la suivante :

Un User Agent (« UA ») s'enregistre auprès du réseau grâce à l'envoi d'un message « REGISTER » à son « *REGISTRAR* ». L'en-tête nommé "To" de ce message « REGISTER » contient l'identité publique à enregistrer et l'en-tête "Contact", son adresse de contact, c'est-à-dire l'adresse physique de l'équipement correspondant (par exemple son adresse IP). Sur réception de ce message « REGISTER », le « *REGISTRAR »* renseigne ces informations dans la base de données de localisation puis répond par un message d'acceptation (« 200 OK »). Ce message clôt la phase d'enregistrement SIP.

Lors d'un unique enregistrement SIP (échange « REGISTER » - « 200 OK »), il est possible d'enregistrer plusieurs adresses de contact associées à la même identité publique. Il n'est par contre pas possible d'enregistrer explicitement via la signalisation SIP plusieurs identités publiques associées à la même adresse de contact.

Enregistrer plusieurs identités publiques impose donc a priori d'initier au minimum autant d'enregistrements que d'identités publiques à enregistrer.

Dans le cas par exemple d'un IPBX raccordé à un réseau public au moyen du protocole SIP et desservant plusieurs usagers chacun affecté d'une identité publique distincte, cet IPBX doit donc envoyer autant de messages « REGISTER » qu'il existe d'identités publiques devant être accessibles depuis le réseau public.

L'architecture IMS (IP Multimedia Subsystem), définie par le 3GPP et par l'ETSI TISPAN, améliore ce mécanisme en permettant l'enregistrement, sous certaines conditions, de plusieurs identités publiques à une même adresse de contact au moyen d'une unique phase d'enregistrement SIP. En effet, cette architecture repose sur une base de données utilisateur (nommée HSS : Home Subscriber Server) dans laquelle est stocké, pour chaque utilisateur, l'ensemble des identités publiques dont il dispose par souscription. Or il est possible de définir, parmi les identités publiques d'un utilisateur, un ou plusieurs ensembles d'identités implicitement enregistrées, c'est-à-dire un ou plusieurs ensembles d'identités qui seront automatiquement enregistrés par le réseau SI P dès lors que l'une des identités de l'ensemble est enregistrée explicitement par l'utilisateur lors d'un enregistrement SIP. L'enregistrement implicite de cet ensemble d'identités associé à l'identité en cours d'enregistrement est donc à l'initiative du réseau, le souscripteur ne peut agir qu'en modifiant son offre de souscription auprès de son opérateur.

La caractéristique commune au mécanisme d'enregistrement ainsi qu'à son enrichissement défini dans le cadre de l'architecture IMS, est le stockage individuel et exhaustif des identités publiques enregistrées dans la base de données de localisation.

Si l'on s'en tient aux mécanismes de base définis dans le protocole SIP, un « UA » souhaitant enregistrer plusieurs identités publiques simultanément doit actuellement initier autant d'enregistrements qu'il existe d'identités à enregistrer. Ceci présente l'inconvénient de conduire à une charge réseau importante en terme de messages échangés et de traitements associés et donner lieu en conséquence à d'éventuelles congestions.

L'enregistrement a en outre généralement lieu au démarrage (ou redémarrage) d'un « UA » et doit être rafraîchi périodiquement. Or un tel redémarrage peut faire suite à un problème réseau, l'envoi d'un nombre considérable de messages suite à un problème réseau peut alors lui-même aggraver ce problème réseau.

Enfin, ceci a pour conséquence de retarder l'enregistrement de tous les usagers, ce qui peut être également problématique étant donné qu'un usager non enregistré ne peut ni recevoir ni émettre d'appels.

Le mécanisme de définition d'identités implicitement enregistrées supporté par l'architecture IMS pallie ces inconvénients, puisqu'un unique message « REGISTER » suffit à enregistrer plusieurs identités publiques. Il nécessite par contre la déclaration préalable dans le réseau de chacune des identités qui devront faire l'objet d'un enregistrement de l'ensemble ainsi que le stockage de ces identités dans la base de données de localisation.

Ceci n'est pas du tout adapté par exemple à un IPBX ou un réseau d'entreprise affectés de tranches ouvertes de numéros de téléphone puisque cela impose de rendre visible par le réseau public l'organisation interne de la tranche de numéros et nécessite en plus un stockage inutilement volumineux des numéros individuels de la tranche.

Ceci impose en outre un processus complexe pour la synchronisation des données du réseau public avec les modifications que peut faire à tout moment le gestionnaire du réseau d'entreprise ou de l'IPBX sur l'organisation de sa ou ses tranches de numéros (ajout, suppression de numéros...).

On constate les mêmes inconvénients lorsque les usagers d'un réseau d'entreprise sont de la forme sip: URI (ex. sip : poste X@YYYYYY.com avec X variant de 0 à 100). On voit qu'une telle entreprise souhaitant augmenter le nombre de ses postes doit prendre contact avec son opérateur de raccordement afin de modifier ses paramètres d'enregistrement implicite.

Le réseau téléphonique commuté (RTC) permet l'émission de la numérotation au fur et à mesure de la composition du numéro par l'abonné sous la forme d'une succession de messages contenant chacun une séquence partielle du numéro composé. Ce mécanisme dit de « chevauchement » (« overlap » en anglais) est souvent utilisé lorsque le numéro composé appartient à un plan ouvert (i.e. à une tranche de longueur variable). Dans le cadre d'une architecture de type IMS, une requête d'appel entrant véhiculant une séquence partielle de numéro est rejetée par le réseau de la même manière que si cette séquence correspondait à un numéro non attribué (i.e. non enregistré). Ceci est lié au fait que seul un numéro complet peut être enregistré dans un réseau SIP et impose la présence d'un intermédiaire réseau en amont du réseau SIP qui détecte une numérotation en chevauchement et reconstitue la numérotation à partir des séquences partielles reçues avant de présenter le message au réseau SIP.

Le document "Call signalling protocols and media stream packetization for packet-based multimédia communication systems" ITU-T STANDARD PRE-PUBLISHED (P), INTERNATIONAL TELECOMMUNICATION UNION, GENEVA, CH, no. H2250 5/6, 29 mai 2006 (2006-05-29), XP017404721 divulgue un protocole de communication téléphonique dans lequel les voies de transmission incluent plusieurs réseaux permettant d'assurer des services de communication entre des équipements H.323.

Le but de l'invention est donc de résoudre les problèmes précédemment évoqués.

A cet effet l'invention a pour objet un procédé d'établissement de liaisons de transmission de données entre un réseau et un équipement de gestion d'une identité publique de groupe (10) raccordé à ce réseau, caractérisé en ce qu'il comporte :
- une étape préalable de définition et d'enregistrement de ladite identité publique de groupe représentative d'au moins un groupe de plusieurs identités publiques individuelles gérées par ledit équipement de gestion d'une identité publique de groupe;
- une étape de vérification d'une requête d'établissement d'appel entrante, ladite requête contenant une séquence de numérotation, destinée à vérifier si ladite séquence correspond à une identité publique de groupe enregistrée;
- une étape d'envoi de ladite requête à une adresse de contact correspondant à l'identité publique de groupe enregistrée.

Ce procédé peut également présenter l'une ou plusieurs des caractéristiques suivantes :
- l'étape de définition de l'identité publique de groupe consiste à définir une règle d'association en groupe desdites plusieurs identités publiques individuelles et l'étape de vérification consiste à vérifier si ladite séquence de numérotation respecte la règle d'association définie ;
- l'étape d'enregistrement de l'identité publique commune de groupe consiste à enregistrer cette identité publique de groupe dans une base de données de localisation dudit réseau ;
- ladite identité publique de groupe est associée à une information d'identification de celle-ci en tant qu'identité commune de groupe dans la base de données de localisation ;
- l'identité publique commune de groupe est formée par une partie commune des plusieurs identités publiques individuelles du groupe.

Selon un autre aspect, ladite adresse de contact correspondant à celle dudit équipement de gestion d'une identité publique de groupe, ledit procédé comprend, suite à la réception de ladite requête d'établissement d'appel entrante par ledit équipement :
- une étape d'analyse par ledit équipement de cette identité publique de groupe afin d'en extraire l'identité publique individuelle correspondante;
- une étape de routage de ladite requête vers un destinataire correspondant (16) à l'identité publique individuelle extraite et raccordé à cet équipement (10), si ladite séquence de numérotation est complète; et
- une étape d'envoi audit réseau d'un message indiquant que le numéro est incomplet, si ladite séquence de numérotation est partielle.

Ainsi, la requête est acheminée par le réseau à destination de l'équipement chargé de gestion de l'identité publique commune de groupe et ceux-ci mettent en oeuvre une étape d'analyse complète de cette identité afin d'en extraire l'identité publique individuelle correspondante et acheminer ces données vers un destinataire correspondant raccordé à cet équipement. Si le numéro est incomplet, un message d'erreur indiquant que le numéro est incomplet est émis sur le réseau, dans le but d'inviter le terminal du demandeur à émettre le numéro complété par les chiffres additionnels qui auraient été composés entre-temps par le demandeur.

L'invention concerne également un équipement de gestion d'une identité publique de groupe dans un réseau de transmission d'informations du type Internet mettant en oeuvre un protocole SIP pour l'établissement de liaisons de transmission de données entre ledit équipement et ledit réseau, caractérisé en ce qu'il comprend :
- des moyens d'envoi d'une requête d'enregistrement d'une identité publique commune de groupe représentative d'au moins un groupe de plusieurs identités publiques individuelles dans une base de données de localisation relié à un serveur de gestion d'enregistrements d'identités publiques associé au réseau;
- des moyens d'analyse d'une requête d'établissement d'appel entrante, ladite requête contenant une identité publique de groupe enregistrée dans ladite base de données de localisation, pour extraire l'identité publique individuelle correspondante;
   et en ce qu'il est apte à mettre en oeuvre :
- des moyens de routage de ladite requête vers un destinataire correspondant à l'identité publique individuelle extraite et raccordé audit serveur de gestion d'une identité publique de groupe, si ladite séquence de numérotation de la requête est complète; et
- des moyens d'envoi audit réseau un message indiquant que le numéro est incomplet, si ladite séquence de numérotation est partielle.

Selon encore un autre aspect, l'invention a pour objet un serveur de gestion d'enregistrements d'identités publiques pour un réseau de transmission d'informations de type Internet mettant en oeuvre un protocole SIP pour l'établissement de liaisons de transmission de données entre ledit réseau et un équipement (10) de gestion d'une identité publique de groupe raccordé à ce réseau (11), ledit serveur étant relié à une base de données de localisation (13) d'enregistrement, caractérisé en ce qu'il comprend ;
- des moyens de définition et d'enregistrement d'une identité publique commune de groupe représentative d'au moins un groupe de plusieurs identités publiques individuelles gérées par ledit équipement de gestion (10);
- des moyens de vérification d'une requête d'établissement d'appel entrant, ladite requête contenant une séquence de numérotation, aptes à vérifier si ladite séquence correspond à une identité publique de groupe enregistrée dans la base de données de localisation; et
- des moyens d'envoi de ladite requête à une adresse de contact correspondant à l'identité publique de groupe enregistrée.

Selon un autre aspect l'invention a pour objet un produit programme d'ordinateur téléchargeable depuis un réseau de communication et/ou stocké sur un support lisible par ordinateur et/ou exécutable par un microprocesseur d'un serveur de gestion d'enregistrements, caractérisé en ce qu'il comprend des instructions de code de programme pour l'exécution du procédé selon l'invention.

L'invention concerne enfin un produit programme d'ordinateur téléchargeable depuis un réseau de communication et/ou stocké sur un support lisible par ordinateur et/ou exécutable par un microprocesseur d'un équipement de gestion d'une identité publique de groupe, caractérisé en ce qu'il comprend des instructions de code de programme pour l'exécution du procédé selon l'invention.

Ainsi l'invention permet de pallier les inconvénients de chacune des deux méthodes de l'état de la technique en permettant, au moyen d'un unique message « REGISTER », d'enregistrer un ensemble d'identités publiques (potentiellement très grand) sous forme d'une "règle" de définition d'un groupe sans que le réseau ait à stocker individuellement chacune des identités constituant cet ensemble.

L'enregistrement de la règle de groupe permet à l'usager (par exemple un réseau d'entreprise) de prendre en charge la terminaison des appels sans avoir à déclarer individuellement chacune des identités publiques qui lui sont associées. La modification d'une règle existante est effectuée via la signalisation de manière dynamique.

L'invention permet en outre à un réseau SIP de pouvoir acheminer une requête d'établissement d'appel entrant contenant une séquence de numérotation partielle mais respectant l'une des règles stockées dans le réseau SIP. L'avantage est que l'entité recevant la requête d'établissement d'appel contenant un numéro incomplet est l'entité qui gère ces numéros. Cette entité peut alors renvoyer vers le demandeur un message d'erreur indiquant que le numéro est incomplet (message "484 Address Incomplete") et invitant ainsi à émettre le numéro complété par les chiffres additionnels qui auraient été composés entre-temps par le demandeur. Sans le procédé défini par cette invention, le demandeur reçoit une indication que le numéro n'est pas attribué ce qui met fin à l'appel.

Le procédé selon l'invention permet alors l'enregistrement dans un réseau SIP, sous forme d'une règle de définition d'un groupe, d'un ensemble indéterminé d'identités non connues individuellement par le réseau. Il trouve comme exemple d'application immédiat, l'enregistrement dans un réseau d'opérateur d'un réseau d'entreprise par exemple ou d'un IPBX affecté d'une ou de plusieurs tranches de longueurs variables de numéros de téléphone ainsi que la prise en charge des requêtes entrantes dans un réseau SIP contenant une séquence de numérotation incomplète.

L'invention sera mieux comprise à la lecture de la description qui va suivre, donnée uniquement à titre d'exemple et faite en se référant aux dessins annexés sur lesquels :
- la figure 1 représente un schéma synoptique illustrant la structure et le fonctionnement d'un procédé et d'un système d'enregistrement SIP d'une identité individuelle de type SIP :URI de l'état de la technique ;
- la figure 2 représente un schéma synoptique illustrant la structure de fonctionnement d'un procédé et d'un système d'enregistrement d'une règle de définition de groupe mise en oeuvre selon l'invention ; et
- la figure 3 représente un schéma synoptique illustrant l'acheminement d'un appel en situation de numérotation incomplète dans un système selon l'invention.

Comme cela a été mentionné précédemment, l'invention concerne un procédé de gestion d'identités publiques dans un réseau de transmission d'informations de type Internet mettant en oeuvre un protocole SIP pour l'établissement de liaisons de transmission de données entre ledit réseau et un équipement de gestion d'une identité publique de groupe raccordé à ce réseau.

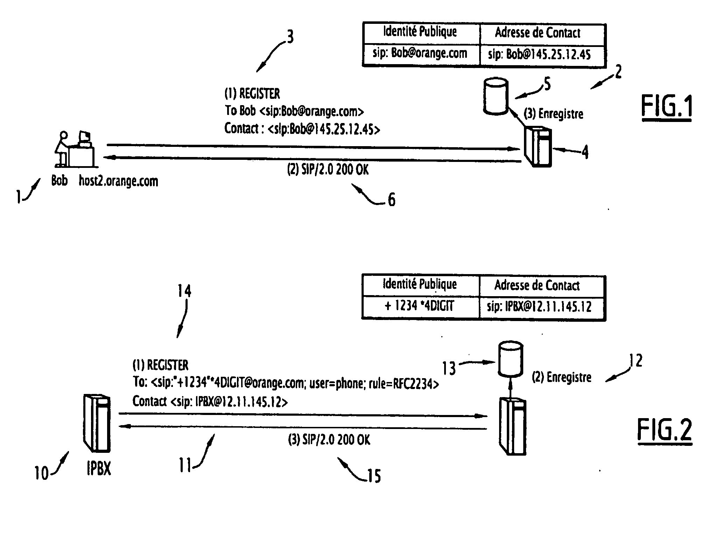

La mise en oeuvre d'un mécanisme d'enregistrement telle qu'elle est actuellement connue dans l'état de la technique, par le protocole SIP, est illustrée sur la figure 1.

Selon ce mécanisme d'enregistrement, un « UA » désigné par la référence générale 1 sur cette figure, s'enregistre auprès du réseau désigné par la référence générale 2, grâce à l'envoi d'un message « REGISTER » désigné par la référence générale 3 à son « REGISTRAR » désigné par la référence générale 4, qui est en fait associé à un serveur de localisation lui-même raccordé à une base de données de localisation désignée par la référence générale 5.

L'entête nommée « To » de ce message « REGISTER » 3, contient l'identité publique à enregistrer et l'entête « Contact », son adresse de contact c'est-à-dire l'adresse physique de l'équipement correspondant comme par exemple son adresse IP. Sur réception de ce message « REGISTER », le « REGISTRAR » renseigne ces informations dans la base de données de localisation 5 puis répond par un message d'acceptation désigné par la référence générale 6 (« 200 OK ») ce message clôturant la phase d'enregistrement SIP.

Comme cela a été mentionné précédemment, lors d'un unique enregistrement SIP (échange « REGISTER » - « 200 OK »), il est possible d'enregistrer plusieurs adresses de contact associées à la même identité publique. Par contre il n'est pas possible d'enregistrer explicitement via la signalisation SIP, plusieurs identités publiques associées à la même adresse de contact.

Enregistrer plusieurs identités publiques impose alors a priori d'initier au minimum autant d'enregistrements que d'identités publiques à enregistrer.

L'invention permet de résoudre ces problèmes.

Ainsi alors que le protocole SIP ne permet à un « UA » que d'émettre une identité publique individuelle dans sa requête d'enregistrement (cette identité pouvant être utilisée pour déduire un ensemble d'identités liées à enregistrer par la même occasion), dans le procédé et le système selon l'invention il est prévu que l' « UA » fasse figurer une règle de définition de groupe ou un pointeur vers une règle préalablement configurée dans le réseau, dans sa requête d'enregistrement de façon à enregistrer un ensemble indéterminé des identités respectant cette règle et donc faisant partie d'un groupe de plusieurs identités publiques individuelles. Ainsi par exemple des règles différentes peuvent être envisagées telles que par exemple « tous les numéros commençant par 12345 » ou « tous les numéros de 7 à 10 chiffres commençant par 12345 » ou encore « toutes les identités contenant la chaîne de caractères *azerty* ».

Par la suite lors de la réception d'une requête d'appel entrante, en plus du mécanisme actuel permettant de savoir si l'identité publique visée figure dans la base de données de localisation de façon à récupérer la ou les adresses de contact où il faut faire suivre la requête, on recherche (c'est-à-dire par exemple le serveur de localisation) si cette identité respecte l'une des règles préalablement enregistrées. La requête est alors transmise vers la ou les adresses de contact associées à chacune des règles qu'elle respecte.

Un exemple de réalisation pour enregistrer une règle du type "toutes les sip: URI dont la partie utilisateur commence par les caractères *xyz*" peut être :
- de réutiliser le message « REGISTER » pour véhiculer une demande d'enregistrement d'une règle,
- de réutiliser l'en-tête « To » pour transporter la règle à enregistrer, ou bien le pointeur vers cette règle,
- d'utiliser derrière les caractères *xyz,* un caractère "carte blanche" comme * pour indiquer qu'il peut s'agir d'un nombre indéfini de caractères de n'importe quelle valeur,
- de définir un nouveau paramètre d'un sip: URI (par exemple « *rule* ») pour indiquer qu'il s'agit d'un sip: URI dont la partie utilisateur comporte une règle et que le caractère * doit être interprété comme "carte blanche",
- de stocker cette règle dans la même base de données de localisation que celle utilisée pour les identités publiques individuelles.

Une telle requête d'enregistrement a alors la forme suivante :
REGISTER ...
To: sip: xyz*@domain, rule

Pour permettre des règles plus complexes, on peut considérer que l'ensemble des symboles pour représenter des règles définies dans la syntaxe ABNF (Augmented Backus-Naur Form) sont possibles, cette syntaxe étant celle utilisée pour représenter le protocole SIP.

Un autre enrichissement peut être que le paramètre ou toute autre information, qui indique que la requête d'enregistrement comporte une règle, indique également la syntaxe utilisée pour représenter cette règle.

La figure 2 illustre un diagramme de flux représentant l'enregistrement complet d'un exemple de règle définie de la façon suivante « tous les numéros téléphoniques commençant par +1234 suivi d'au plus quatre chiffres (compris entre 0 et 9) ». Cette règle peut se décrire de la manière suivante selon la syntaxe ABNF : « +1234 »*4DIGIT. L'enregistrement de cette règle peut donc se faire par un message « REGISTER » contenant dans le champ « To », cette règle décrite dans la syntaxe ABNF. La syntaxe utilisée pour représenter la règle est désignée dans le nouveau paramètre « rule=RFC2234 ».

Ainsi :
REGISTER ...

To: sip: :"+1234" *4DIGIT@orange.com; user=phone; rule=RFC2234.

On reconnaît en effet sur cette figure 2, un équipement de gestion d'une identité publique de groupe désigné par la référence générale 10 sur cette figure et constitué par exemple par un IPBX.

Cet IPBX est raccordé par exemple à travers un réseau de transmission d'informations 11 de type Internet à un serveur de localisation désigné par la référence générale 12, associé à une base de données de localisation désignée par la référence générale 13.

Le message d'enregistrement « REGISTER » est désigné par la référence générale 14, le message d'acceptation (« 200 OK ») étant désigné par la référence générale 15.

Ainsi dans le procédé de gestion selon l'invention, on met en oeuvre une étape de définition et d'enregistrement d'une identité publique de groupe représentative d'au moins un groupe de plusieurs identités publiques individuelles gérées par un équipement de gestion d'une identité publique de groupe raccordé au réseau, comme par exemple le terminal 10.

La définition de l'identité publique commune de groupe est en fait une définition d'une règle d'association en groupe de ces plusieurs identités publiques individuelles, l'enregistrement de cette identité publique de groupe consistant à enregistrer celle-ci dans une base de données de localisation d'un serveur de localisation associé au réseau.

Cette identité publique de groupe est alors associée à une information d'identification de celle-ci en tant qu'identité commune de groupe dans la base de données de localisation et l'identité publique commune de groupe peut être formée par une partie commune des plusieurs identités publiques individuelles du groupe.

Lors de la réception d'une identité publique à travers le réseau, le serveur peut alors vérifier que cette identité reçue correspond ou non à une identité de groupe stockée dans la base de données de localisation.

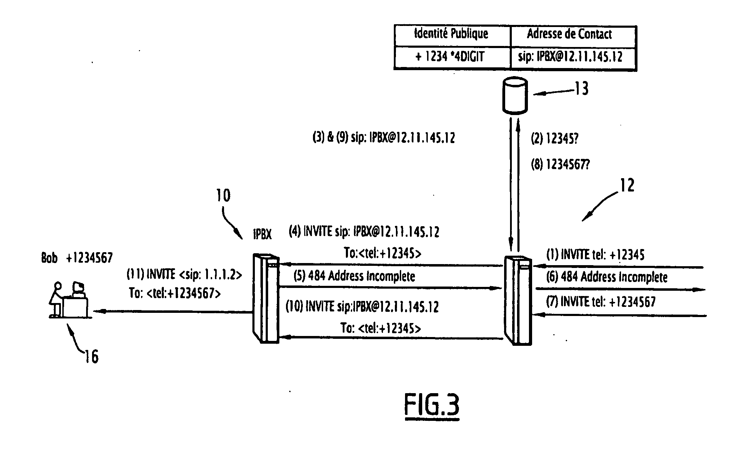

Ainsi et comme cela est illustré sur la figure 3, l'invention permet en outre à un réseau SIP de pouvoir acheminer une requête d'établissement d'appels entrants contenant une séquence de numérotation partielle mais respectant l'une des règles stockées dans le réseau SIP. L'avantage est que l'entité recevant la requête d'établissement d'appel contenant un numéro incomplet est l'entité qui gère ces numéros. Cette entité peut alors renvoyer vers le demandeur un message d'erreur indiquant que le numéro est incomplet (comme par exemple le message « 484 Adress Incomplete ») et invitant ainsi à émettre le numéro complété par les chiffres additionnels qui auraient été composés entre temps par le demandeur.

Les différents messages référencés (1) à (11) sur cette figure 3, illustrent les différents échanges entre le réseau, le serveur 12 et la base de données de localisation 13, l'IPBX 10 et le destinataire correspondant désigné quant à lui par la référence générale 16.

Ainsi on constate que les données sont acheminées par le réseau à destination l'équipement de gestion d'identités publiques communes de groupe, ceux-ci mettant en oeuvre une étape d'analyse complète de cette identité afin d'en extraire l'identité publique individuelle correspondante et acheminer ces données et donc cet appel vers un destinataire correspondant raccordé et géré par cet équipement.

Les différents messages échangés étant de type connu, on ne les décrira pas plus en détails par la suite.

Ce procédé et ce système peuvent être mis en oeuvre par des moyens logiciels tel qu'un programme d'ordinateur qui comporte alors des instructions de code qui, lorsque ce programme est exécuté, permettent de définir et d'enregistrer une identité publique de groupe représentative d'au moins un groupe de plusieurs identités publiques individuelles dans un réseau de transmission d'informations de type Internet mettant en oeuvre un protocole SIP pour l'établissement de liaisons de transmission de données entre le réseau et un équipement de gestion d'une identité publique de groupe raccordé à ce réseau.

En fait le procédé selon l'invention repose sur la capacité à véhiculer entre un « UA » et son « REGISTRAR » SIP, une demande d'enregistrement d'une règle de définition d'un groupe représentée par une identité publique commune de groupe, la capacité à stocker dans une base de données de localisation cette règle et la ou les adresses de contact associées et la capacité, lors de la réception d'une requête entrante, à interroger la base de données de localisation stockant les règles et à vérifier si l'identité publique de destination reçue dans la requête vérifie l'une des règles enregistrées.

Bien entendu d'autres modes de réalisation encore peuvent être envisagés.

## Revendications

1. Procédé de gestion d'identités publiques de groupe pour l'établissement de liaisons de transmission de données entre un réseau (11) de transmission d'informations mettant en oeuvre un protocole SIP et un équipement de gestion d'une identité publique de groupe (10) raccordé à ce réseau, **caractérisé en ce qu'**il comporte :
- une étape préalable de définition et d'enregistrement de ladite identité publique de groupe représentant de manière unique au moins un groupe de plusieurs identités publiques individuelles gérées par ledit équipement de gestion, auprès d'un serveur de gestion d'enregistrements d'identités (12) ;
- une étape de vérification d'une requête d'établissement d'appel entrante, ladite requête contenant une séquence de numérotation, destinée à vérifier si ladite séquence correspond à une identité publique de groupe enregistrée;
- une étape d'envoi de ladite requête à une adresse de contact correspondant à l'identité publique de groupe enregistrée.

2. Procédé selon la revendication 1, **caractérisé en ce que** l'étape de définition de l'identité publique commune de groupe consiste à définir une règle d'association en groupe desdites plusieurs identités publiques individuelles et **en ce que** l'étape de vérification consiste à vérifier si ladite séquence de numérotation respecte la règle d'association définie.

3. Procédé selon la revendication 1 ou 2, **caractérisé en ce que** l'étape d'enregistrement de l'identité publique commune de groupe consiste à enregistrer cette identité publique de groupe dans une base de données de localisation (13) dudit réseau (11).

4. Procédé selon la revendication 3, **caractérisé en ce que** ladite identité publique de groupe est associée à une information d'identification de celle-ci en tant qu'identité commune de groupe dans la base de données de localisation (13).

5. Procédé selon l'une quelconque des revendications précédentes, **caractérisé en ce que** l'identité publique commune de groupe est formée par une partie commune des plusieurs identités publiques individuelles du groupe.

6. Procédé selon l'une des revendications 1 à 5, **caractérisé en ce que**, ladite adresse de contact correspondant à celle dudit équipement (10) de gestion d'une identité publique de groupe, ledit procédé comprend, suite à la réception de ladite requête d'établissement d'appel entrante par ledit équipement (10) :
- une étape d'analyse par ledit équipement (10) de cette identité publique de groupe afin d'en extraire l'identité publique individuelle correspondante;
- une étape de routage de ladite requête vers un destinataire correspondant (16) à l'identité publique individuelle extraite et raccordé à cet équipement (10), si ladite séquence de numérotation est complète; et
- une étape d'envoi audit réseau d'un message indiquant que le numéro est incomplet, si ladite séquence de numérotation est partielle.

7. Equipement de gestion d'une identité publique de groupe (10) dans un réseau (11) de transmission d'informations mettant en oeuvre un protocole SIP pour l'établissement de liaisons de transmission de données entre ledit équipement et ledit réseau (11), **caractérisé en ce qu'**il comprend :
- des moyens d'envoi d'une requête d'enregistrement d'une identité publique commune de groupe représentant de manière unique au moins un groupe de plusieurs identités publiques individuelles dans une base de données de localisation (13) reliée à un serveur de gestion d'enregistrements d'identités publiques (12) associé audit réseau (11);
- des moyens d'analyse d'une requête d'établissement d'appel entrante, ladite requête contenant une identité publique de groupe enregistrée dans ladite base de données de localisation (13), pour extraire l'identité publique individuelle correspondante;
et **en ce qu'**il est apte à mettre en oeuvre :
- des moyens de routage de ladite requête vers un destinataire correspondant (16) à l'identité publique individuelle extraite et raccordé audit équipement de gestion d'une identité publique de groupe (10), si ladite séquence de numérotation de la requête est complète; et
- des moyens d'envoi audit réseau un message indiquant que le numéro est incomplet, si ladite séquence de numérotation est partielle.

8. Serveur de gestion d'enregistrements d'identités publiques (12) pour un réseau de transmission d'informations mettant en oeuvre un protocole SIP pour l'établissement de liaisons de transmission de données entre ledit réseau et un équipement (10) de gestion d'une identité publique de groupe raccordé à ce réseau (11), ledit serveur étant relié à une base de données de localisation (13) d'enregistrement, **caractérisé en ce qu'**il comprend ;
- des moyens de définition et d'enregistrement de ladite identité publique commune de groupe représentant de manière unique au moins un groupe de plusieurs identités publiques individuelles gérées par ledit équipement de gestion d'une identité publique de groupe;
- des moyens de vérification d'une requête d'établissement d'appel entrante, ladite requête contenant une séquence de numérotation, aptes à vérifier si ladite séquence correspond à une identité publique de groupe enregistrée dans la base de données de localisation; et
- des moyens d'envoi de ladite requête à une adresse de contact correspondant à l'identité publique de groupe enregistrée.

9. Produit programme d'ordinateur téléchargeable depuis un réseau de communication et/ou stocké sur un support lisible par ordinateur et/ou exécutable par un microprocesseur d'un serveur de gestion d'enregistrements d'identités publiques (12), **caractérisé en ce qu'**il comprend des instructions de code de programme pour l'exécution du procédé selon les revendications 1 à 5.

10. Produit programme d'ordinateur téléchargeable depuis un réseau de communication et/ou stocké sur un support lisible par ordinateur et/ou exécutable par un microprocesseur d'un équipement de gestion d'une identité publique de groupe (10), **caractérisé en ce qu'**il comprend des instructions de code de programme pour l'exécution du procédé selon la revendication 6.

## Patentansprüche

1. Verfahren zur Verwaltung öffentlicher Gruppenidentitäten für den Aufbau von Datenübertragungsverbindungen zwischen einem Datenübertragungsnetz (11), das ein SIP-Protokoll verwendet, und einer Ausrüstung zur Verwaltung einer öffentlichen Gruppenidentität (10), die mit diesem Netz verbunden ist, **dadurch gekennzeichnet, dass** es aufweist:
- einen vorhergehenden Schritt der Definition und der Aufzeichnung der öffentlichen Gruppenidentität, die unverwechselbar mindestens eine Gruppe von mehreren individuellen öffentlichen Identitäten darstellt, die von der der Verwaltungsausrüstung verwaltet werden, in einem Verwaltungsserver von Identitätsaufzeichnungen (12);
- einen Schritt der Überprüfung einer eingehenden Anrufaufbauanforderung, wobei die Anforderung eine Nummerierungsfolge enthält, die dazu bestimmt ist, zu überprüfen, ob die Folge einer aufgezeichneten öffentlichen Gruppenidentität entspricht;
- einen Schritt des Sendens der Anforderung an eine Kontaktadresse, die der aufgezeichneten öffentlichen Gruppenidentität entspricht.

2. Verfahren nach Anspruch 1, **dadurch gekennzeichnet, dass** der Schritt der Definition der gemeinsamen öffentlichen Gruppenidentität darin besteht, eine Gruppenzuordnungsregel der mehreren individuellen öffentlichen Identitäten zu definieren, und dass der Überprüfungsschritt darin besteht, zu überprüfen, ob die Nummerierungsfolge die definierte Zuordnungsregel einhält.

3. Verfahren nach Anspruch 1 oder 2, **dadurch gekennzeichnet, dass** der Schritt der Aufzeichnung der gemeinsamen öffentlichen Gruppenidentität darin besteht, diese öffentliche Gruppenidentität in einer Lokalisierungsdatenbank (13) des Netzes (11) aufzuzeichnen.

4. Verfahren nach Anspruch 3, **dadurch gekennzeichnet, dass** die öffentliche Gruppenidentität einer Identifikationsinformation von dieser als gemeinsame Gruppenidentität in der Lokalisierungsdatenbank (13) zugeordnet ist.

5. Verfahren nach einem der vorhergehenden Ansprüche, **dadurch gekennzeichnet, dass** die gemeinsame öffentliche Gruppenidentität von einem gemeinsamen Bereich der mehreren individuellen öffentlichen Identitäten der Gruppe geformt wird.

6. Verfahren nach einem der Ansprüche 1 bis 5, **dadurch gekennzeichnet, dass**, wenn die Kontaktadresse derjenigen der Verwaltungsausrüstung (10) einer öffentlichen Gruppenidentität entspricht, das Verfahren nach dem Empfang der eingehenden Anrufaufbauanforderung durch die Ausrüstung (10) enthält:
- einen Schritt der Analyse dieser öffentlichen Gruppenidentität durch die Ausrüstung (10), um daraus die entsprechende individuelle öffentliche Identität zu entnehmen;
- einen Schritt des Routens der Anforderung zu einem Empfänger, der der entnommenen individuellen öffentlichen Identität entspricht (16) und mit dieser Ausrüstung (10) verbunden ist, wenn die Nummerierungsfolge vollständig ist; und
- einen Schritt des Sendens einer Mitteilung an das Netz, die anzeigt, dass die Nummer unvollständig ist, wenn die Nummerierungsfolge partiell ist.

7. Ausrüstung zur Verwaltung einer öffentlichen Gruppenidentität (10) in einem Informationsübertragungsnetz (11), das ein SIP-Protokoll verwendet, für den Aufbau von Datenübertragungsverbindungen zwischen der Ausrüstung und dem Netz (11), **dadurch gekennzeichnet, dass** sie enthält:
- Einrichtungen zum Senden einer Aufzeichnungsanforderung einer gemeinsamen öffentlichen Gruppenidentität, die unverwechselbar mindestens eine Gruppe von mehreren individuellen öffentlichen Identitäten in einer Lokalisierungsdatenbank (13) darstellt, die mit einem Server zur Verwaltung von Aufzeichnungen öffentlicher Identitäten (12) verbunden ist, der dem Netz (11) zugeordnet ist;
- Einrichtungen zur Analyse einer eingehenden Anrufaufbauanforderung, wobei die Anforderung eine in der Lokalisierungsdatenbank (13) aufgezeichnete öffentliche Gruppenidentität enthält, um die entsprechende individuelle öffentliche Identität zu entnehmen;
und dass sie einsetzen kann:
- Einrichtungen zum Routen der Anforderung an einen Empfänger (16), der der entnommenen individuellen öffentlichen Identität entspricht und mit der Ausrüstung zur Verwaltung einer öffentlichen Gruppenidentität (10) verbunden ist, wenn die Nummerierungsfolge der Anforderung vollständig ist; und
- Einrichtungen zum Senden einer Mitteilung an das Netz, die anzeigt, dass die Nummer unvollständig ist, wenn die Nummerierungsfolge partiell ist.

8. Verwaltungsserver von Aufzeichnungen öffentlicher Identitäten (12) für ein Informationsübertragungsnetz, das ein SIP-Protokoll verwendet, für den Aufbau von Datenübertragungsverbindungen zwischen dem Netz und einer Ausrüstung (10) zur Verwaltung einer öffentlichen Gruppenidentität, die mit diesem Netz (11) verbunden ist, wobei der Server mit einer Aufzeichnungs-Lokalisierungsdatenbank (13) verbunden ist, **dadurch gekennzeichnet, dass** er enthält:
- Einrichtungen zur Definition und zur Aufzeichnung der gemeinsamen öffentlichen Gruppenidentität, die unverwechselbar mindestens eine Gruppe mehrerer individueller öffentlicher Identitäten darstellt, die von der Verwaltungsausrüstung einer öffentlichen Gruppenidentität verwaltet werden;
- Einrichtungen zur Überprüfung einer eingehenden Anrufaufbauanforderung, wobei die Anforderung eine Nummerierungsfolge enthält, die überprüfen können, ob die Folge einer öffentlichen Gruppenidentität entspricht, die in der Lokalisierungsdatenbank aufgezeichnet ist; und
- Einrichtungen zum Senden der Anforderung an eine Kontaktadresse, die der aufgezeichneten öffentlichen Gruppenidentität entspricht.

9. Computerprogrammprodukt, das von einem Kommunikationsnetz heruntergeladen und/oder auf einem computerlesbaren Träger gespeichert und/oder von einem Mikroprozessor eines Verwaltungsservers von Aufzeichnungen öffentlicher Identitäten (12) ausgeführt werden kann, **dadurch gekennzeichnet, dass** es Programmcodeanweisungen für die Ausführung des Verfahrens nach einem der Ansprüche 1 bis 5 enthält.

10. Computerprogrammprodukt, das von einem Kommunikationsnetz heruntergeladen und/oder auf einem computerlesbaren Träger gespeichert und/oder von einem Mikroprozessor einer Verwaltungsausrüstung einer öffentlichen Gruppenidentität (10) ausgeführt werden kann, **dadurch gekennzeichnet, dass** es Programmcodeanweisungen für die Ausführung des Verfahrens nach Anspruch 6 enthält.

## Claims

1. Method for managing public group identities for setting up data transmission links between an information transmission network (11) implementing an SIP protocol and a public group identity management device (10) attached to this network, **characterized in that** it comprises:
- a prior step of defining and registering said public group identity representing in a unique manner at least one group of several individual public identities managed by said management device, with an identities registration management server (12);
- a step of verifying an incoming request for call setup, said request containing a dialling sequence, intended to verify whether said sequence corresponds to a registered public group identity;
- a step of dispatching said request to a contact address corresponding to the registered public group identity.

2. Method according to Claim 1, **characterized in that** the step of defining the common public group identity consists in defining a group association rule for said several individual public identities and **in that** the verifying step consists in verifying whether said dialling sequence complies with the association rule defined.

3. Method according to Claim 1 or 2, **characterized in that** the step of registering the common public group identity consists in registering this public group identity in a location database (13) of said network (11) .

4. Method according to Claim 3, **characterized in that** said public group identity is associated with an item of information of identification of the latter in the guise of common group identity in the location database (13).

5. Method according to any one of the preceding claims, **characterized in that** the common public group identity is formed by a common part of the several individual public identities of the group.

6. Method according to one of Claims 1 to 5, **characterized in that**, said contact address corresponding to that of said device (10) for managing a public group identity, said method comprises, subsequent to the receipt of said incoming request for call setup by said device (10) :
- a step of analysis by said device (10) of this public group identity so as to extract therefrom the corresponding individual public identity;
- a step of routing said request to a recipient (16) that corresponds to the individual public identity extracted and is attached to this device (10), if said dialling sequence is complete; and
- a step of dispatching to said network of a message indicating that the number is incomplete, if said dialling sequence is partial.

7. Public group identity management device (10) in an information transmission network (11) implementing an SIP protocol for the setup of data transmission links between said device and said network (11), **characterized in that** it comprises:
- means for dispatching a request for registering a common public group identity representing in a unique manner at least one group of several individual public identities in a location database (13) linked to a public identities registration management server (12) associated with said network (11);
- means for analyzing an incoming request for call setup, said request containing a public group identity registered in said location database (13), so as to extract the corresponding individual public identity;
and **in that** it is able to implement:
- means for routing said request to a recipient (16) that corresponds to the individual public identity extracted and is attached to said public group identity management device (10), if said dialling sequence of the request is complete; and
- means for dispatching to said network a message indicating that the number is incomplete, if said dialling sequence is partial.

8. Public identities registration management server (12) for an information transmission network implementing an SIP protocol for the setup of data transmission links between said network and a public group identity management device (10) attached to this network (11), said server being linked to a registration location database (13), **characterized in that** it comprises;
- means for defining and registering said common public group identity representing in a unique manner at least one group of several individual public identities managed by said public group identity management device;
- means for verifying an incoming request for call setup, said request containing a dialling sequence, said means being able to verify whether said sequence corresponds to a public group identity registered in the location database; and
- means for dispatching said request to a contact address corresponding to the registered public group identity.

9. Computer program product downloadable from a communication network and/or stored on a medium readable by computer and/or executable by a microprocessor of a public identities registration management server (12), **characterized in that** it comprises program code instructions for the execution of the method according to Claims 1 to 5.

10. Computer program product downloadable from a communication network and/or stored on a medium readable by computer and/or executable by a microprocessor of a public group identity management device (10), **characterized in that** it comprises program code instructions for the execution of the method according to Claim 6.
